(19) Europäisches Patentamt
European Patent Office
Office européen des brevets

(11) Publication number: **0 056 739**
**A2**

# (12) EUROPEAN PATENT APPLICATION

(21) Application number: 82300305.8

(22) Date of filing: 21.01.82

(51) Int. Cl.³: A 01 N 47/24
A 01 N 25/04

(30) Priority: 21.01.81 US 226552

(43) Date of publication of application:
28.07.82 Bulletin 82/30

(84) Designated Contracting States:
AT BE CH DE FR GB IT LI LU NL

(71) Applicant: UNION CARBIDE CORPORATION
Old Ridgebury Road
Danbury Connecticut 06817(US)

(72) Inventor: Campbell, John Andrew
220 Walnut Drive
Hurricane West Virginia, 25526(US)

(72) Inventor: Hansen, James Leonard
11 Barrington Road
Nitro West Virginia, 25526(US)

(72) Inventor: Lipscomb, Warren Turner, Jr.
202 1/2 Dunbar Street Institute
West Virginia, 25526(US)

(72) Inventor: Boros, Eugene Joseph
654 Forrest Circle
South Charleston West Virginia, 25526(US)

(74) Representative: Allard, Susan Joyce et al,
BOULT, WADE & TENNANT 27 Furnival street
London EC4A 1PQ(GB)

## (54) Non-rheopectic concentrate of pesticides containing symmetrical bis-carbamate compounds.

(57) A non-rheopectic aqueous concentrate of a pesticide comprising:

(a) at least one symmetrical bis-carbamoyl sulfide compound of the general formula:

```
 O R'      R' O
 ||  |      |  ||
RO-C-N-S-N-C-OR
```

wherein:

R is:

```
R2
    C=N-    or AC =N-;
R3
```

wherein:

$R_2$ is alkyl, alkylthio, alkoxy, alkanoyl or alkoxycarbonyl, all of which may be unsubstituted or aliphatically-substituted in any combination with one or more cyano, nitro, alkylthio, alkylsulfinyl, alkylsulfonyl, alkoxy or $R_4R_5$-NCO-groups; or $R_2$ is phenyl, $R_4R_5$NCO- or $R_6$CON($R_4$);

wherein

$R_4$ and $R_5$ are individually hydrogen or alkyl;

$R_6$ is hydrogen, alkyl or alkoxy;

$R_3$ is hydrogen, alkyl, alkylthio or cyano;

A is a four-or five-member divalent aliphatic chain which includes one or two divalent oxygen, sulfur, sulfenyl or sulfonyl groups and which may include not more than one divalent amino, alkylamino or carbonyl groups, in any combination; provided that the total number of carbon atoms in R may not exceed eight and provided further than when $R_2$ is alkyl substituted with alkylthio, $R_3$ is cyano alkyl or alkylthio; and wherein R' is alkyl containing from one to four carbon atoms; the said bis-carbamoyl compound being present in an amount of from about 35 to 50 weight percent, (b) a dispersant, in an amount of from about 0.5 to about 5 weight percent, (c) a thickener, in an amount of from about 0.02 to about 0.5 weight percent, and (d) a wetting agent, in an amount of from about 0.0 to 1 weight percent, the said weight percents being based on the total weight of the concentrate.

EP 0 056 739 A2

NON-RHEOPECTIC CONCENTRATE OF PESTICIDES CONTAINING SYMMETRICAL BIS-CARBAMATE COMPOUNDS

This invention relates generally to aqueous concentrates of pesticides containing symmetrical bis-carbamate toxicant, and, more specifically to non-rheopectic concentrates containing symmetrical N-substituted bis-carbamoyl sulfide compounds.

Symmetrical N-substituted bis-carbamoyl sulfide compounds are known in the art. These compounds are useful as active (toxicant) ingredients in pesticides. These pesticides can be formulated for use as dusts, granules, wettable-powders or flowable formulations. Typical such toxicants, their method of production and their pesticidal formulation are disclosed in U.S. application Serial No. 636,373.

It has recently been discovered that certain flowable formulations, namely aqueous concentrates, containing a high concentration of ($\geq$ 30 wt. % as a toxicant) of N-substituted bis-carbamoyl sulfide compounds are subject to a thickening (herein "rheopectic") problem after such aqueous concentrates are transported by conventional carrier, making the concentrate difficult to remove from its shipment container. This rheopectic problem is apparently due to an increase in viscosity of the concentrate when the material is subjected to the

low-level shear forces commonly incurred in the shipment of fluids.

Accordingly, it would be highly desirable to develop an aqueous concentrate of a pesticide containing at least 30 wt. % of symmetrical N-substituted bis-carbamoyl sulfide compound that is non-rheopectic; i.e., not subject to undue thickening when subjected to low-level shear forces.

It is an object of the present invention to provide a non-rheopectic aqueous concentrate of a pesticide containing at least 30 wt. % of a symmetrical N-substituted bis-carbamoyl sulfide compound.

This and other objects will become apparent from a reading of the following detailed specification.

The present invention provides a non-rheopectic aqueous concentrate of a pesticide comprising:

(a) at least one symmetrical bis-carbamoyl sulfide compound of the formula:

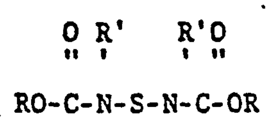

wherein:

R is:

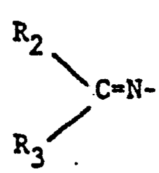 or 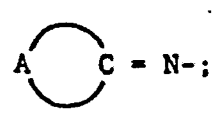

wherein:

$R_2$ is alkyl, alkylthio, alkoxy, alkanoyl or alkoxycarbonyl, all of which may be unsubstituted or aliphatically substituted in any combination with one or more cyano, nitro, alkylthio, alkylsulfinyl, alkylsulfonyl, alkoxy or $R_4R_5$-NCO-groups; or $R_2$ is phenyl, $R_4R_5NCO$- or $R_6CON(R_4)$-;

wherein:

$R_4$ and $R_5$ are individually hydrogen or alkyl;

$R_6$ is hydrogen, alkyl or alkoxy;

$R_3$ is hydrogen, alkyl, alkylthio or cyano;

A is a four or five member divalent aliphatic chain which includes one or two divalent oxygen, sulfur, sulfenyl or sulfonyl groups and which may include not more than one divalent amino, alkylamino or carbonyl groups, in any combination;

provided that the total number of carbon atoms in R may not exceed eight and provided further that when $R_2$ is alkyl substituted with alkylthio, $R_3$ is cyano alkyl or alkylthio; and

R' is alkyl containing from one to four carbon atoms, said bis-carbamoyl compound being present in an amount of from about 30 to about 50 weight percent,

(b) a dispersant, in an amount of from about 0.5 to about 5 weight percent,

(c) a thickener, in an amount of from about 0.02 to about 0.5 weight percent, and

(d) a wetting agent, in an amount of from about 0.0 to 0.1 weight percent,

said weight percents being based on the weight of the concentrate.

The symmetrical bis-carbamoyl compound employed in the aqueous concentrates of the present invention can be prepared in accordance with the methods given in U.S. application Serial No. 636,373, incorporated herein by reference. These compounds can be employed as the sole toxicants in the concentrates or they can be employed in admixture with other known toxicants. The preferred symmetrical bis-carbamoyl compounds useful in the present invention are those where R' is methyl. The most preferred such compound is N,N'-bis-[1-methylthioacetaldehyde-O-(N-methyl-carbamoyl)oximino] sulfide.

The bis-carbamoyl compound useful in the present invention is preferably employed in the concentrate in an amount of from about 30 to about 50 (more preferably from about 35 to about 48 and most preferably from about 40 to about 46) weight percent, based on the weight of the concentrate.

The dispersant useful in the present invention acts to maintain any solid particles present in the concentrate (e.g., toxicant particles) in suspension. Althought dispersants such as lignosulfonates are well-known in the art, one class of dispersants, namely

sodium naphthlene formaldehyde condensates (available commercially as MORWET, a product of Petrochemicals Company) is preferred for use in the present invention.

The dispersant is preferably employed in the concentrate in an amount of from about 0.5 to about 5.0 (more preferably from about 1.0 to about 3.0 and most preferably from about 1.5 to about 2.5) weight percent, based on the weight of the concentrate.

The thickener employed in the present invention acts to increase shelf life stability of the concentrate by inhibiting the sedimentation rate of solid particles in the concentrate. Although a variety of thickeners are known in the art, the preferred thickeners for use herein would include a polysaccharide (available commercially as KELZAN, a product of Kelco Corporation) or ethoxylated cellulose. A preferred polysaccharide is xanthan gum.

The thickener is preferably employed in the concentrate in an amount of from about 0.02 to about 0.5 (more preferably from about 0.04 to about 0.3 and most preferably from about 0.06 to about 0.2) weight percent, based on the weight of the concentrate.

The wetting agent useful in the invention is employed to wet any solid particles (e.g. toxicant particles) in the concentrate. The wetting agent can be any conventional surfactant such as the nonionic, anionic and cationic surfactants. Particularly preferred surfactants are those comprising aryl sulfonates (e.g. sodium xylene

sulfonate) and sulfated nonylphenols such as AL-1491 or AL-1492; products of I.C.I. Corporation.

The wetting agent is preferably employed in the concentrate in an amount of from about 0.0 to 1.0 (more preferably from about 0.0 to about 0.75 and most preferably from about 0.0 to about 0.5) weight percent, based on the weight of the concentrate.

Other ingredients are optionally employed in minor amounts of less than about 5 wt. percent in the production of a commercially suitable concentrate. These include an antifreeze to reduce the freezing point of the concentrate such as propylene glycol, ethylene glycol, glycerol, and the like; a preservative to promote the shelf life of the concentrate by inhibiting microbial build-up such as formaldehyde, cresol and chlorophenol; a pH control agent to maintain an acid concentrate having a pH of below 7 (preferably a pH of 4 to 5) such as an organic acid, i.e., citric, propionic or acetic acid; a resuspending agent such as silicon dioxide (available commercially as HISIL 260 or HISIL 233, products of PPG Industries, Inc.; residual extenders useful in maintaining adhesion between the diluted concentrate when applied in the field and its target (e.g. plant) surface, such as terpene resins modified with an oil soluble emulsifier-adjuvant system in a

kerosene solvent available commercially as NU-FILM 17, a product of Miller Chemicals & Fertilizer Corporation; and, antifoams such as dimethylpolysiloxanes available commercially as SAG 10 and SAG 30, products of Union Carbide Corporation.

The preferred amounts of the optional ingredients based on the total weight of concentrate are as follows: antifreeze, about 2 to about 5 wt. %; preservative, about 0.05 to about 0.2 wt. %; pH control agent, about 0.05 to about 0.2 wt. %; resuspending agent, about 1 to about 4 wt. %; residual extender, about 1 to about 4 wt. %; and anti-foam, about 0.02 to about 0.3 wt. %.

The concentrates of the instant invention are suitable diluted with water in accordance with conventional procedure to provide a pesticidal formulation to be used in the field, as is well-known in the art.

As used herein, a concentrate is defined as "non-rheopectic" when it exhibits essentially no change in viscosity when subjected to low-level shear forces over several hours' time. Preferred non-rheopectic concentrates are those wherein the "three-hour roll viscosity" divided by the "initial stirred viscosity" (defined below) provides a ratio of between 1 and 2, more preferably a ratio of between 1 and 1.5.

The following Example is intended to illustrate, but in no way limit, the present invention:

Example 1

Aqueous concentrates were prepared containing fixed weight percents of the following ingredients as specified below:

| | | Wt. % of Concentrate |
|---|---|---|
| toxicant | N,N'-bis-[1-methylthioacetaldehyde-O-(N-methylcarbamoyl) oximino] sulfide | 44 |
| antifreeze | propylene glycol | 3.5 |
| preservative | formaldehyde, 37 wt. % aqueous solution | 0.3 |
| pH control agent | acetic acid | 0.1 |
| suspending agent | HISIL 233 | 2.3 |
| residual extender | NU-FILM 17 | 2.0 |
| antifoam | SAG 10 (10 wt. % active ingredient) | 2.2 |
| water | | 43.6 |

In addition, the concentrates contained a dispersant (MORWET D425), a wetting agent (AL-1491) and a thickener (KELZAN) in amounts that varied between concentrates. These amounts are specified in Table I below.

For each concentrate, an "initial stirred viscosity" and a "3-hour roll viscosity" measurement was taken. The initial stirred viscosity was measured with a Brookfield viscometer after stirring for two minutes using a mixer. The three-hour roll viscosity measurement was made using a Brookfield viscometer after subjecting a jar full of each concentrate to three hour rolling in a one-quart wide-mouth jar using a conventional roll mill.

The ratio of these two viscosities represented a convenient measure of the effect of low-level shear forces (rolling) on the concentrates. The preferred concentrates are those having a viscosity ratio approaching 1 (see Runs 6 to 9 in Table I).

The results are given in Table I which follows:

TABLE I

CONCENTRATE RUNS

| Run No. | Dispersant Wt. % | Wetting Agent Wt. % | Thickener Wt. % | Initial Stirred Viscosity (CPS) | 3 hr. Roll Viscosity (CPS) | Viscosity Ratio |
|---|---|---|---|---|---|---|
| 1 | 0.5 | 1.7 | 0.15 | 2250 | 10,000 | 4.44 |
| 2 | 1.5 | 0.7 | 0.15 | 680 | 1,230 | 1.81 |
| 3 | 0.5 | 1.7 | 0.05 | 2000 | 35,000 | 17.50 |
| 4 | 0.5 | 0.7 | 0.15 | 1210 | 25,000 | 20.66 |
| 5 | 2.1 | 1.3 | 0.13 | 540 | 980 | 1.81 |
| 6 | 1.5 | 0.7 | 0.05 | 220 | 340 | 1.55 |
| 7 | 1.9 | 0.1 | 0.12 | 520 | 590 | 1.13 |
| 8 | 1.9 | 0.08 | 0.08 | 290 | 316 | 1.09 |
| 9 | 1.9 | 0.00 | 0.08 | 316 | 320 | 1.01 |

CLAIMS:

1. A non-rheopectic aqueous concentrate of a pesticide comprising:

(a) at least one symmetrical bis-carbamoyl sulfide compound of the general formula:

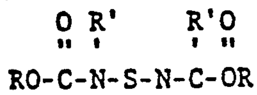

wherein:

R is:

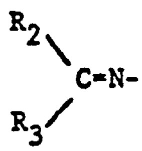

or

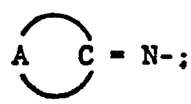

wherein:

$R_2$ is alkyl, alkylthio, alkoxy, alkanoyl or alkoxycarbonyl, all of which may be unsubstituted or aliphatically-substituted in any combination with one or more cyano, nitro, alkylthio, alkylsulfinyl, alkylsulfonyl, alkoxy or $R_4R_5$-NCO-groups; or $R_2$ is phenyl, $R_4R_5NCO$- or $R_6CON(R_4)$;

wherein:

$R_4$ and $R_5$ are individually hydrogen or alkyl;

$R_6$ is hydrogen, alkyl or alkoxy;

$R_3$ is hydrogen, alkyl, alkylthio or cyano;

A is a four-or five-member divalent aliphatic chain which includes one or two divalent oxygen, sulfur, sulfenyl or sulfonyl groups and which may include not more than one divalent amino, alkylamino or carbonyl groups, in any combination;

provided that the total number of carbon atoms in R may not exceed eight and provided further than when $R_2$ is alkyl substituted with alkylthio, $R_3$ is cyano alkyl or alkylthio; and wherein R' is alkyl containing from one to four carbon atoms; the said bis-carbamoyl compound being present in an amount of from about 35 to 50 weight percent, (b) a dispersant, in an amount of from about 0.5 to about 5 weight percent, (c) a thickener, in an amount of from about 0.02 to about 0.5 weight percent, and (d) a wetting agent, in an amount of from about 0.0 to 1 weight percent, the said weight percents being based on the total weight of the concentrate.

2. A concentrate as claimed in claim 1 wherein the bis-carbamoyl sulfide compound is N,N'-bis- [methyl-thioacetaldehyde-O-(N-methylcarbamoyl) oximino] sulfide.

3. A concentrate as claimed in claim 1 or claim 2 wherein the dispersant is a sodium naphthelene/formaldehyde condensate.

4. A concentrate as claimed in any one of the preceding claims wherein the thickener is a polysaccharide.

5. A concentrate as claimed in claim 4 wherein the polysaccharide is a xanthan gum.

6. A concentrate as claimed in any one of the preceding claims wherein the wetting agent is a mixture of aryl sulfonates and sulfated nonylphenols.

7. A concentrate as claimed in any one of the preceding claims wherein component (a) is present in an amount of from about 35 to about 48 weight percent, component (b) is present in an amount of from about 1.0 to about 3.0 weight percent, component (c) is present in an amount of from about 0.04 to about 0.3 weight percent, and component (d) is present in an amount of from about 0.0 to about 0.75 weight percent; the said weight percents being based on the total weight of the concentrate.

8. A concentrate as claimed in claim 7 wherein component (a) is present in an amount of from about 40 to about 46 weight percent, component (b) is present in an amount of from about 1.5 to about 2.5 weight percent, component (c) is present in an amount of from about 0.06 to about 0.14 weight percent, and component (d) is present in an amount of from about 0.0 to about

0.5 weight percent.

9. A concentrate as claimed in any one of the preceding claims which additionally contains:

(e) an antifreeze, in an amount of from about 2 to about 5 weight percent,

(f) a preservative, in an amount of from about 0.05 to about 0.2 weight percent,

(g) a pH-control agent, in an amount of from about 0.05 to about 0.2 weight percent,

(h) a re-suspending agent, in an amount of from about 1 to about 4 weight percent,

(i) a residual extender, in an amount of from about 1 to about 4 wt. %, and

(j) an antifoaming agent, in an amount of from about 0.02 to about 0.3 weight percent; the said weight percents being based on the total weight of the concentrate.

10. A concentrate as claimed in claim 9 wherein component (a) is N,N'-bis [1-methylthioacetaldehyde-O-(N-methylcarbamoyl) oximino] sulfide, component (b) is a sodium napththelene/formaldehyde condensate, component (c) is a xanthan gum component (d) is a mixture of aryl sulfonates and sulfated nonylphenols, component

(e) is propylene glycol, component (f) is formaldehyde, component (g) is citric or acetic acid, component (h) is silicon dioxide, component (i) is a terpene resin, and component (j) is a dimethylpolysiloxane.